Europäisches Patentamt

European Patent Office

Office européen des brevets

(19)

(11) EP 0 908 741 B1

(12) EUROPÄISCHE PATENTSCHRIFT

(45) Veröffentlichungstag und Bekanntmachung des Hinweises auf die Patenterteilung:
04.12.2002 Patentblatt 2002/49

(51) Int Cl.⁷: G01S 3/48

(21) Anmeldenummer: 98118892.3

(22) Anmeldetag: 06.10.1998

(54) **Peilverfahren zur Bestimmung der Einfallsrichtung eines hochfrequenten elektromagnetischen Signals**

Method of direction finding for determination of angle of arrival of high-frequency electromagnetic signal

Procédé de radiogoniométrie pour déterminer la direction d' incidence d'un signal à fréquence radio

(84) Benannte Vertragsstaaten:
AT CH DE FR GB LI

(30) Priorität: 10.10.1997 DE 19744692

(43) Veröffentlichungstag der Anmeldung:
14.04.1999 Patentblatt 1999/15

(73) Patentinhaber: EADS Deutschland GmbH
81663 München (DE)

(72) Erfinder:
• Herrmann, Franz
89614 Öpfingen (DE)
• Manfred, Schuster, Dr.
89257 Illertissen (DE)

(74) Vertreter: Meel, Thomas
Patentassessor,
c/o Dornier GmbH
L H G
88039 Friedrichshafen (DE)

(56) Entgegenhaltungen:
DE-A- 4 421 571       US-A- 4 626 859
US-A- 4 876 549       US-A- 5 497 161
US-A- 5 568 154

**Beschreibung**

Die Erfindung geht aus von einem Peilverfahren zur Bestimmung der Einfallsrichtung eines hochfrequenten elektromagnetischen Signals nach dem Oberbegriff des Patentanspruchs 1.

Es sind Peilverfahren unter Einsatz von sogenannten Interferometer-Peilern bekannt. Diese beruhen auf der Verwendung von mindestens zwei (Empfangs-) Antennen, die auf einen vorgebbaren Frequenzbereich, beispielsweise den Hochfrequenz(HF)-Bereich abgestimmt sind. Dabei besitzen die Antennen eine vorgebbare Richtcharakteristik, beispielsweise eine sogenannte Vorwärtscharakteristik, das heißt, jede Antenne hat beispielsweise in der Azimutebene (parallel zur Erdoberfläche) einen Empfangsbereich von maximal 180°. Es ist zweckmäßig, die Hauptempfangsrichtungen aller Antennen im wesentlichen parallel zueinander auszurichten, so daß lediglich eine gemeinsame Hauptempfangsrichtung vorhanden ist. Fällt nun beispielsweise ein monofrequentes HF-Signal aus einer Richtung, ungleich der Hauptempfangsrichtung, auf eine. solche Antennenanordnung, so entstehen für das empfangene HF-Signal an den einzelnen Antennen Laufzeitunterschiede, aus denen sich zugehörige Phasenunterschiede ermitteln lassen. Aus dem Phasenunterschied der Empfangssignale von zwei Antennen ist dann prinzipiell die gesuchte Empfangsrichtung (Einfallsrichtung) des HF-Signals (HF-Welle) ermittelbar.

Die US 4,626,859 offenbart ein Peilverfahren, bei dem die Ausgangssignale der Antennen digitalisiert und die digitalisierten Signale mittels einer diskreten Fourier-Transformation in den Frequenzbereich umgesetzt werden. Anschließend werden im Frequenzbereich die Phasen der einfallenden Signale ermittelt.

In der US 5,497,161 ist ein Peilverfahren beschrieben, das mehrere Antennen, jedoch nur einen Analysekanal aufweist. Die Ausgangssignale der Antenne werden mittels eines Antennenumschalters abwechselnd auf den Analysekanal geschaltet. In diesem erfolgt eine Umsetzung in eine Zwischenfrequenz, eine Digitalisierung des zwischenfrequenten Signals und eine Umsetzung des digitalisierten Signals in den Frequenzbereich mittels einer Fast-Fourier-Transformation.

Der Erfindung liegt die Aufgabe zugrunde, ein gattungsgemäßes Verfahren dahingehend zu verbessern, daß einfach in Hardware realisiert werden kann, und mit dem eine hohe Meßgenauigkeit bei hoher Winkelauflösung sowie hoher Reaktionsgeschwindigkeit ermöglicht wird.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß zunächst keine Bestimmung der Frequenz des einfallenden Signals (Welle) erforderlich ist. Es kann also vorteilhafterweise ein sogenannter Breitbandempfänger, der vorteilhafterweise eine vorgebbare geringe Einschwingzeit besitzt, verwendet werden. Denn eine hohe Einschwingzeit verringert nachteiligerweise die Reaktionszeit des Meßverfahrens.

Ein zweiter Vorteil besteht darin, daß das erfindungsgemäße Verfahren weitgehend unabhängig ist von absichtlichen und/oder unabsichtlichen Störungen sowie Umweltbedingungen, beispielsweise einem weiteren einfallenden Signal, das nahezu identisch ist mit dem auszuwertenden Signal.

Ein dritter Vorteil besteht darin, daß eine gleichzeitige Messung mehrerer gleichartiger oder unterschiedlicher Signale mit unterschiedlichen Signalfrequenzen möglich wird.

Ein vierter Vorteil besteht darin, daß eine hohe Alterungsbeständigkeit einer nach dem Verfahren betriebenen Anordnung erreichbar ist. Es entsteht vorteilhafterweise eine gute Reproduzierbarkeit der Meßergebnisse, da insbesondere das sogenannte Driften vermieden wird.

Weitere Vorteile ergeben sich aus der nachfolgenden Beschreibung.

Die Erfindung wird im folgenden anhand von Ausführungsbeispielen näher beschrieben unter Bezugnahme auf schematisch dargestellte Figuren. Es zeigen

Fig.1    ein Blockbild eines ersten Ausführungsbeispiels mit zwei Antennenkanälen,

Fig.2    ein Blockbild eines zweiten Ausführungsbeispiels mit einem Antennen-Umschalter sowie lediglich einem nachgeschaltetem Antennenkanal.

Das im folgenden beschriebene Peilverfahren eignet sich zur präzisen Messung der Einfallsrichtung nahezu beliebiger hochfrequenter Signale (HF-Signale). Eine vorherige Kenntnis oder Messung der Signalfrequenz wird dabei nicht benötigt. Das Verfahren basiert auf einer erweiterten FFT-Analyse und kann sowohl bei kontinuierlichen als auch gepulsten HF-Signalen angewendet werden. Sind vorgebbare Bedingungen erfüllt, so ist sogar eine zeitliche Überlagerung von Signalen zulässig.

Das Verfahren beruht darauf, daß sich einer in getrennten Meßkanälen durchgeführten Frequenzselektion des Meßsignals - durch die Verwendung einer zeitlich lückenlosen digitalen Filterung (im speziellen Fall: Benutzung einer komplexen Breitband FFT (<u>F</u>ast <u>F</u>ourier <u>T</u>ransformation)) - eine Auswertung der zugehörigen Phasendifferenzen sowie eine Analyse der Phasenwinkelfolgen aufeinanderfolgender FFT-Zyklen anschließt. Dadurch wird eine gleichzeitige Messung mehrerer gleichartiger oder unterschiedlicher Signale mit unterschiedlichen Frequenzen möglich.

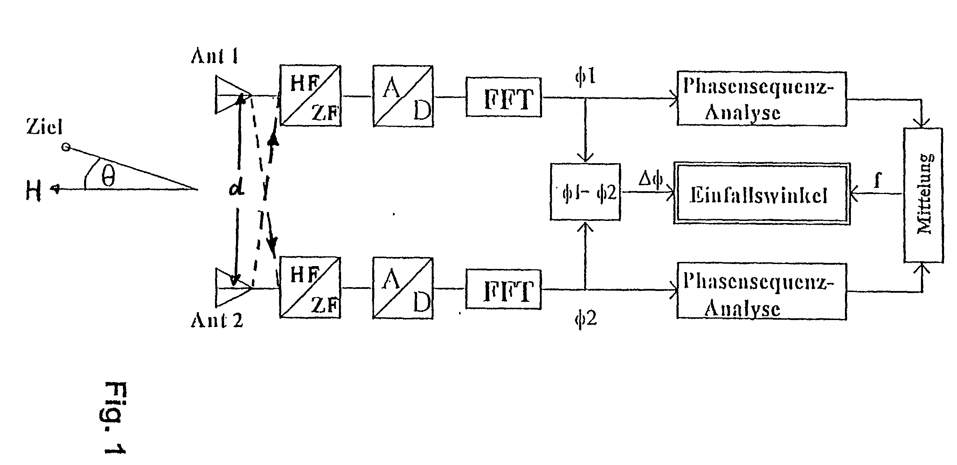

Fig.1 zeigt ein Ziel, beispielsweise einen Hoch- oder Höchstfrequenzsender, der ein HF-Signal aussendet. Die zugehörige Welle (Einfallssignal) habe bezüglich einer vorgebbaren Hauptrichtung H einen zu messenden Einfallswinkel θ (Signal-Einfallsrichtung). Zur Bestimmung der Signal-Einfallsrichtung werden mindestens zwei im wesentlichen gleichartige, im allgemeinen parallel ausgerichtete Antennen Ant1, Ant2 verwendet, welche das Hochfrequenzsignal empfangen. Dabei sind die Antennen Ant1, Ant2 als Breitbandantennen, beispielsweise für den Radar-Frequenzbereich, ausgebildet und derart ausgerichtet, daß deren Hauptempfangsrichtung mit der Hauptrichtung H zusammenfällt. Das Verfahren ist sogar dann noch anwendbar, wenn zwischen den Antennenachsen (Hauptrichtungen der Empfangscharakteristik) eine große Winkeldifferenz, beispielsweise 45 Grad, vorhanden ist. Das heißt, es ist vorteilhafterweise keine kostenungünstige sowie störanfällige mechanische Justierung der Antennen Ant1, Ant2 erforderlich. Jeder Antenne ist ein zugehöriger Antennenkanal nachgeschaltet. Jeder Antennenkanal enthält einen an die zu empfangenden Signale angepaßten Antennen-Vorverstärker, dem ein Mischer HF/ZF für einen vorgebbaren Zwischenfrequenz-Bereich (ZF-Bereich) nachgeschaltet ist. Dessen Ausgangssignal wird nach einer Analog/Digitalwandlung A/D einer FFT-Anordnung FFT zugeführt, in welcher eine Umsetzung von dem Zeit- in den Frequenzbereich erfolgt. Am Ausgang der FFT-Anordnungen FFT entstehen für jeden in der Frequenz unterscheidbaren Spektralanteil (bei jedem der gleichzeitigen HF-Signale) zwei Signale mit im allgemeinen unterschiedlichen Phasen φ1, φ2. Es wird nun eine Phasendifferenzmessung φ1-φ2 durchgeführt, wobei ein Phasendifferenzsignal entsprechend der Formel

$$\Delta\phi = \phi1\text{-}\phi2$$

entsteht, Δφ die Phasendifferenz zwischen den beiden Ausgangssignalen der FFT-Anordnungen angibt.

Der gesuchte Einfallswinkel θ läßt sich bei bekanntem oder meßbarem Antennen-Basisabstand d ermitteln aus der (zunächst unbekannten) Signalfrequenz f und der Phasendifferenz Δφ beider Antennen-Meßkanäle entsprechend der Formel:

$$\theta = \arcsin[c_0 \bullet \Delta\phi / (2\pi\bullet f\bullet d)] \qquad (1)$$

mit

    arcsin = Arcussinus-Funktion,
    $c_0$ = Lichtgeschwindigkeit und
    • = Multiplikationsoperator.

Beim vorliegenden Verfahren ergibt sich die Phasendifferenz Δφ unmittelbar aus den (komplexen) FFT-Resultaten der beiden Analyse-Kanäle. Unter der Voraussetzung einer hinreichend langen, vorgebbaren Signalzeitdauer ist es alternativ möglich, die Phasendifferenz Δφ mittels einer Mittelwertbildung über mehrere FFT-Intervalle zu bestimmen. Auf diese Weise können statistische Meßfehler vorteilhafterweise auf einen nicht störenden, vernachlässigbaren Wert verringert werden. Eine weitere Verringerung der statistischen Meßfehler ist möglich durch eine zeitlich vorgenommene wechselseitig überkreuzte Schaltung der Antennenkanäle. Dabei werden beispielsweise die Ausgangssignale der Antennen Ant 1, Ant 2 zunächst entsprechend der in Fig. 1 dargestellten Weise ausgewertet. Nach einem vorgebbarem Zeittakt erfolgt dann eine Umschaltung derart, daß die Antennen Ant 1, Ant 2 entsprechend den in Fig.1 gestrichelt dargestellten Verbindungen (gekreuzte Verbindungen) mit den nachgeschalteten Auswertekanälen verbunden sind.

Die gemäß Gleichung (1) zur Bestimmung des Einfallswinkels θ weiterhin benötigte Signalfrequenz f läßt sich nun vorteilhafterweise ebenfalls aus den FFT-Ergebnissen (Ausgangssignale der FFT-Anordnungen) gewinnen. Zur Erhöhung der Meßgenauigkeit gegenüber einer einfachen FFT-Analyse (dort ist die Frequenzmeßgenauigkeit allein durch den FFT-Linienabstand im Amplitudenspektrum bestimmt) wird bei diesem Verfahren ein Frequenzmeßverfahren verwendet, das auf einer speziellen Auswertung von FFT-Phasensequenzen, die bei einer komplexen Filterung, vorzugsweise einer Breitband FFT entstehen, beruht. Dabei werden getrennt für jeden (Antennen-) Auswertekanal und über einen vorgebbaren Meßzeitraum zeitlich fortlaufend die bei einer komplexen Breitband FFT entstehenden sogenannten Ergebnisvektoren, in der komplexen Frequenzebene, ermittelt und dabei deren Phasenwinkel, in der komplexen Frequenzebene, bestimmt. Aus einer vorgebbaren Folge zeitlich aufeinanderfolgender Phasenwinkel wird ein mittlerer (gewichteter) Phasenwinkel bestimmt und daraus ein Schätzwert für die Signalfrequenzlage innerhalb des diskreten FFT-Spektrums. Die damit erzielbare Frequenzmeßgenauigkeit ist dabei zum einen abhängig von der gewählten Meßzeitdauer und zum andern von dem vorhandenen Signal-Störabstand im Meßkanal (Antennenkanal). Das zu einer genauen Frequenzmessung bei der Peilung angewandte Meßverfahren ist ausführlicher beschrieben in der am selben Tag eingereichten deutschen Patentanmeldung DE 197 44 691 A1.

Die für beide Antennen-Meßkanäle getrennt gebildeten Frequenz-Schätzwerte können bedarfsweise durch eine arithmetische Mittelwertbildung (Mittelung) zu einem gemeinsamen Frequenzschätzwert zusammengefaßt werden.

Die derart (nach der optionalen Mittelung) ermittelte Signalfrequenz f wird anschließend der Anordnung zur Bestimmung des Einfallswinkels θ zugeführt, in der eine Auswertung entsprechend Gleichung (1) erfolgt.

Eine Vereinfachung des beschriebenen Verfahrens ist möglich, wenn die Bestimmung der Signalfrequenz f mittels der Phasensequenz-Analyse lediglich in einem Antennen-Meßkanal erfolgt.

Das beschriebene Meßverfahren zur Bestimmung des Einfallswinkels läßt sich unter der Voraussetzung hinreichender, vorgebbarer spektraler Selektion durch die FFT-Analyse (Einflußgrößen: Signal-Stör- sowie Frequenzabstand) in vorteilhafter Weise auch zur Peilung mehrerer, gleichzeitig vorhandener Signale, die unterschiedliche Einfallswinkel besitzen können, verwenden (Simultan-Peilung).

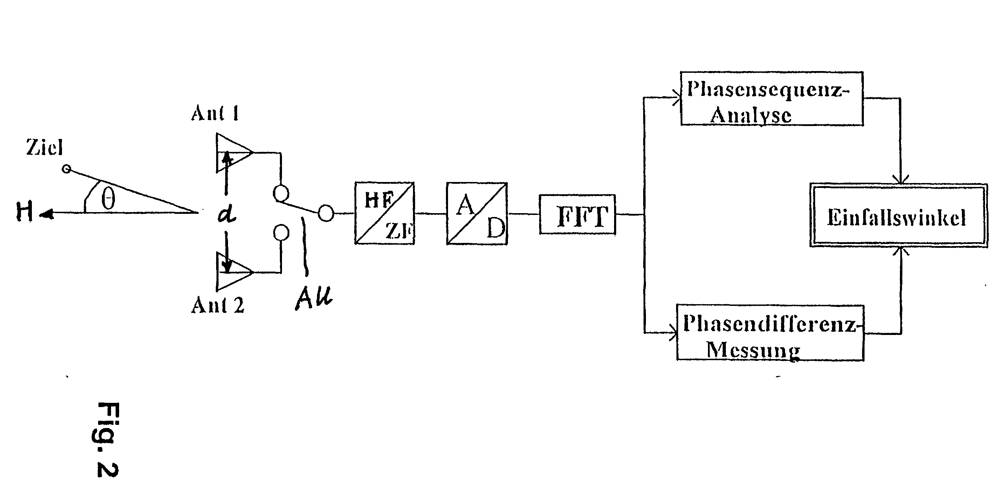

Fig.2 zeigt eine Anordnung zur Verringerung des Schaltungsaufwandes zur Durchführung des Verfahrens. Diese Anordnung unterscheidet sich von derjenigen entsprechend Fig.1 dadurch, daß die Ausgangssignale der Antennen Ant1, Ant2, vorzugsweise nach einer Vorverstärkung, einem Antennen-Umschalter AU (Multiplexer) zugeführt werden. Dessen Ausgangssignal wird in einem einzigen Analyse-Kanal (Auswertekanal) verarbeitet. Mittels des Antennen-Umschalters AU wird dabei nach jedem FFT-Intervall abwechselnd zwischen den Ausgangssignalen der einzelnen Antennen umgeschaltet. Meßungenauigkeiten, die auf sogenannte Gleichlaufprobleme zurückzuführen sind, werden auf diese Weise auf einen vernachlässigbaren Wert verringert. Das beschriebene, modifizierte Peilverfahren erfordert jedoch eine vorgebbare Konstanz sowohl der Signalfrequenz als auch der Winkelposition über den vorgebbaren Meßzeitraum.

Mit dem Verfahren sind beispielsweise folgende Werte erreichbar:

Bei einer Abtastfrequenz von beispielsweise 1 GHz und bei einem minimalen Signal- zu Störabstand von 0 dB ist für die einfallende Welle eine Winkelmeßgenauigkeit von ungefähr 0,5 mrad (rms) bei einem Einfallswinkel θ innerhalb eines (Winkel-)Eindeutigkeitsbereiches, der durch den gewählten Antennenabstand bestimmt ist, erreichbar. Dabei ist ein Antennenabstand von 10 λ vorhanden, wobei λ die Wellenlänge der einfallenden Welle angibt. Es wird eine Pulsdauer von 1 μs zugrunde gelegt und eine 64-Punkte FFT verwendet, das heißt, ein FFT-Intervall enthält 64 Abstastwerte. Die Frequenzmeßgenauigkeit ist kleiner gleich 100 kHZ und entspricht derjenigen, die in der vorstehend erwähnten deutschen Patentanmeldung DE 197 44 691 A1 genannt ist. Dabei ist die Meßzeit größer gleich $1/T_{FFT}$ wählbar, wobei $T_{FFT}$ die zeitliche Dauer eines FFT-Intervalls bezeichnet. Derart kurze Meßzeiten sind ausreichend zur Durchführung einer Simultanpeilung. Das sogenannte Driften wird lediglich durch ein möglicherweise vorhandenes zeitliches Driften des Abtasttaktes bestimmt.

Die Erfindung ist nicht auf die beschriebenen Beispiele beschränkt, sondern auf einen weiten Bereich der Elektrotechnik und/oder der Meßtechnik anwendbar. Denn es ist ersichtlich, daß das Verfahren für einfallende elektromagnetische Wellen mit nahezu beliebiger Frequenz geeignet ist. Es ist dann lediglich erforderlich, die Empfangsantennen sowie die zur Durchführung des Verfahrens verwendeten Bauteile und/oder Baugruppen, insbesondere den HF/ZF-Mischer, den A/D-Wandler sowie die FFT-Anordnung an den verwendeten Frequenzbereich anzupassen.

**Patentansprüche**

1. Peilverfahren zur Bestimmung der Einfallsrichtung eines hochfrequenten elektromagnetischen Signals, wobei

   - mindestens zwei Empfangs-Antennen, die einen Empfang des einfallenden Signals ermöglichen und die einen vorgebbaren Basis-Abstand besitzen, verwendet werden,

   - eine zwischen den Ausgangssignalen der Empfangs-Antennen vorhandene Phasendifferenz ermittelt wird und

   - aus der Phasendifferenz die Einfallsrichtung des Signals bezüglich einer vorgebbaren Hauptrichtung der Antennenanordnung bestimmt wird,

   - wobei die Ausgangssignale der Antennen (Ant1, Ant2) in ein Zwischenfrequenzsignal mit vorgebbarer Zwischenfrequenz umgesetzt werden,

   - das Zwischenfrequenzsignal durch eine Analog/Digital-Wandlung (A/D) in ein entsprechendes digitales Signal umgewandelt wird,

   - das digitale Signal durch eine Fourier-Transformation in den Frequenzbereich umgesetzt wird,

   - im Frequenzbereich eine Phasendifferenz-Messung erfolgt zwischen den den Antennen (Ant1, Ant2) zugeordneten Frequenzbereichs-Signalen, wobei eine Phasendifferenz (ΔΦ) ermittelt wird,

   **dadurch gekennzeichnet, daß**

   - die Fourier-Transformation eine Fast-Fourier-Transformation (FFT) ist, wobei diese in zeitlich lükkenlos aufeinanderfolgenden Fourier-Intervallen erfolgt,

   - im Frequenzbereich eine Phasensequenzanalyse erfolgt, wobei innerhalb eines vorgebbaren Meßzeitraums zeitlich fortlaufend die Phasendifferenzen für zeitlich aufeinanderfolgende Fourier-Intervalle ermittelt werden und aus diesen Phasendifferenzen ein Schätzwert für die Lage der Signalfrequenz (f) innerhalb des diskreten Fourier-Spektrums ermittelt wird und

- daß aus der Phasendifferenz (ΔΦ) und der Signalfrequenz (f) der Einfallswinkel (θ) ermittelt wird entsprechend der Formel

$$\theta = \arcsin[c_0 \bullet \Delta\phi / (2\pi \bullet f \bullet d)] \qquad (1)$$

mit

arcsin = Arcussinus-Funktion,
$c_0$ = Lichtgeschwindigkeit und
• = Multiplikationsoperator.

2. Peilverfahren nach Anspruch 1, **dadurch gekennzeichnet, daß** die Ausgangssignale der Antennen (Ant1, Ant2) einem Analysekanal, zumindest bestehend aus

- einem Antennen-Umschalter (AU) zum Umschalten der Ausgangssignale der Antennen (Ant1, Ant2), wobei der Antennen-Umschalter (AU) nach Maßgabe der zeitlichen Länge der verwendeten Fourier-Intervalle nach jedem Fourier-Intervalle abwechselnd zwischen den Antennen (Ant1, Ant2) umgeschaltet wird,

- einem dem Antennen-Umschalter (AU) nachgeschalteten Mischer (HF/ZF) zum Umsetzen der Antennensignale in einen vorgebbaren Zwischenfrequenzbereich,

- einem dem Mischer (HF/ZF) nachgeschalteten Analog/Digital-Wandler (A/D) und

- einem dem Analog/Digital-Wandler (A/D) nachgeschalteten Fourier-Transformator (FFT)

zugeführt werden.

3. Peilverfahren nach Anspruch 1, **dadurch gekennzeichnet,**

- **daß** jede Antenne (Ant1, Ant2) an einen zugehörigen Analysekanal, jeweils zumindest bestehend aus

- Mischer (HF/ZF) zum Umsetzen eines Antennensignals in einen vorgebbaren Zwischenfrequenzbereich,

- einem dem Mischer (HF/ZF) nachgeschalteten Analog/Digital-Wandler (A/D) und

- einem dem Analog/Digital-Wandler (A/D) nachgeschalteten Fourier-Transformator (FFT)

angekoppelt wird,
und

- **daß** die Phasendifferenz-Messung (Φ1 - Φ2) zwischen den Ausgangssignalen der jeder Antenne (Ant1, Ant2) zugeordneten Fourier-Transformatoren (FFT) erfolgt.

4. Peilverfahren nach Anspruch 3, **dadurch gekennzeichnet,**

- **daß** lediglich in einem Analysekanal nach der Fourier-Transformation (FFT) eine Phasensequenzanalyse zur Bestimmung der Signalfrequenz (f) durchgeführt wird und

- **daß** die Signalfrequenz (f) zur Bestimmung des Einfallswinkels verwendet wird.

5. Peilverfahren nach Anspruch 3, **dadurch gekennzeichnet,**

- **daß** in jedem Analysekanal nach der Fourier-Transformation (FFT) eine Phasensequenzanalyse zur Bestimmung der Signalfrequenz (f) durchgeführt wird,

- **daß** die in jedem Analysekanal ermittelten Signalfrequenzen in vorgebbarer Weise gemittelt werden, so daß eine gemittelte Signalfrequenz (f) entsteht und

- **daß** die gemittelte Signalfrequenz (f) ) zur Bestimmung des Einfallswinkels verwendet wird.

6. Peilverfahren nach einem der vorhergehenden Ansprüche, **dadurch gekennzeichnet, daß** zumindest bei einfallenden Signale im Hoch- oder Höchstfrequenzbereich eine Fast-Fourier-Transformation (FFT) verwendet wird.

7. Peilverfahren nach einem der vorhergehenden Ansprüche zur Verwendung bei einer Simultan-Peilung, bei der von mindestens zwei unterschiedlichen einfallenden Wellen im wesentlichen gleichzeitig die Einfallsrichtungen bestimmt werden.

**Claims**

1. Direction-finding method for determining the incidence direction of a radio-frequency electromagnetic signal, in which

- at least two receiving antennas, which allow reception of the incident signal and which have a base separation which can be predetermined, are used,

- a phase difference between the output signals from the receiving antennas is determined, and

- the incidence direction of the signal with respect to a main direction, which can be predetermined, of the antenna arrangement is determined from the phase difference,

- in which the output signals from the antennas (Ant1, Ant2) are converted to an intermediate frequency signal and an intermediate frequency which can be predetermined,

- the intermediate frequency signal is converted by analogue/digital conversion (A/D) to a corresponding digital signal,

- the digital signal is converted by means of a Fourier transformation to the frequency domain,

- a phase difference measurement is carried out in the frequency domain between the frequency band signals which are associated with the antennas (Anti, Ant2) with a phase difference ($\Delta\Phi$) being determined,

**characterized in that**

- the Fourier transformation is a Fast Fourier Transformation (FFT), in which this transformation is carried out at Fourier intervals which follow one another in time without any gaps,

- a phase sequence analysis is carried out in the frequency domain, in which the phase differences for Fourier intervals which follow one another in time are determined sequentially in time within a measurement time period which can be predetermined, and an estimated value for the position of the signal frequency (f) within the discrete Fourier spectrum is determined from these phase differences, and

- **in that** the incidence angle ($\theta$) is determined from the phase difference ($\Delta\Phi$) and the signal frequency (f), using the formula:

$$\theta = \arcsin[c_0 \cdot \Delta\phi / (2\pi \cdot f \cdot d)] \qquad (1)$$

where

arcsin = an arc sine function,
$c_0$ = the speed of light, and
• = a multiplication operator.

2. Direction-finding method according to Claim 1, **characterized in that** the output signals from the antennas (Ant1, Ant2) are supplied to an analysis channel, at least comprising

- an antenna changeover switch (AU) for switching the output signals of the antennas (Ant1, Ant2), with the antenna changeover switch (AU) being switched alternately between the antennas (Ant1, Ant2) after each Fourier interval on the basis of the time duration of the Fourier intervals that are used,

- a mixer (RF/IF), which follows the antenna changeover switch (AU), for converting the antenna signals to an intermediate frequency band which can be predetermined,

- an analogue/digital converter (A/D) which follows the mixer (RF/IF), and

- a Fourier transformer (FFT) which follows the analogue/digital converter (A/D).

3. Direction-finding method according to Claim 1, **characterized**

- **in that** each antenna (Anti, Ant2) is coupled to an associated analysis channel, in each case at least comprising

  - a mixer (RF/IF) for converting an antenna signal to an intermediate frequency band which can be predetermined,

  - an analogue/digital converter (A/D) following the mixer (RF/IF), and

  - a Fourier transformer (FFT) following the analogue/digital converter (A/D), and

- **in that** the phase difference measurement ($\Phi1 - \Phi2$) is carried out between the output signals of the Fourier transformers (FFT) which are associated with each antenna (Anti, Ant2).

4. Direction-finding method according to Claim 3, **characterized**

- **in that** a phase sequence analysis for determining the signal frequency (f) is carried out only in one analysis channel after the Fourier transformation (FFT), and

- **in that** the signal frequency (f) is used to determine the incidence angle.

5. Direction-finding method according to Claim 3, **characterized**

- **in that** a phase sequence analysis for determining the signal frequency (f) is carried out after the Fourier transformation (FFT) in each analysis channel,

- **in that** the signal frequencies which are determined in each analysis channel are averaged in a manner which can be predetermined, such that an averaged signal frequency (f) is produced, and

- **in that** the averaged signal frequency (f) is used to determine the incidence angle.

6. Direction-finding method according to one of the preceding claims, **characterized in that** a Fast Fourier Transformation (FFT) is used at least if the incident signals are in the high-frequency band or in the very high-frequency band.

7. Direction-finding method according to one of the preceding claims, for use for simultaneous direction finding, in which the incidence directions of at least two different incident waves are determined essentially simultaneously.


**Revendications**

1. Procédé de radiogoniométrie pour déterminer la direction d'incidence d'un signal électromagnétique à haute fréquence, dans lequel

- on utilise au moins deux antennes réceptrices, permettant la réception du signal incident et possédant un écartement de leur base défini,
- on trouve une différence de phases existant entre les signaux de sortie des antennes de réception et
- on détermine, à partir de la différence de phases, la direction d'incidence du signal par rapport à une direction principale définie du dispositif d'antenne,
- on transpose les signaux de sortie des antennes (Ant1, Ant2) en un signal de fréquence intermédiaire dont la fréquence intermédiaire est définie,
- on convertit le signal de fréquence intermédiaire au moyen d'un convertisseur analogique-numérique (A/D) en un signal numérique correspondant,
- on transpose le signal numérique par une transformation de Fourier dans le domaine fréquentiel,
- on réalise une mesure de différence de phases dans le domaine fréquentiel entre les signaux des domaines fréquentiels attribués aux antennes (Ant1, Ant2), ce qui permet de trouver une différence de phases ($\Delta\Phi$),

**caractérisé en ce que**

- la transformation de Fourier est une Fast-Fourier-Transformation (FFT) réalisée dans des intervalles de Fourier adjacents chronologiquement successifs,
- on réalise une analyse de séquences de phases dans le domaine fréquentiel, dans laquelle on trouve chronologiquement en continu, dans un intervalle de temps de mesure défini, les différences de phases pour des intervalles de Fourier chronologiquement successifs et à partir de ces différences de phases, on trouve une valeur estimée de la position de la fréquence (f) du signal à l'intérieur du spectre de Fourier discret, et **en ce que**
- on trouve, à partir de la différence de phases ($\Delta\Phi$) et de la fréquence (f) du signal, un angle d'incidence ($\Theta$) correspondant à la formule

$$\Theta = \arcsin[c_0 \cdot \Delta\Phi / (2\pi \cdot f \cdot d)] \qquad (1)$$

avec

arcsin = fonction arc sinus
$C_0$ = vitesse de la lumière et
• = opérateur de multiplication.

2. Procédé de radiogoniométrie selon la revendication 1, **caractérisé en ce que** les signaux de sortie des antennes (Ant1, Ant2) sont acheminés vers un canal d'analyse constitué au moins de

- un commutateur d'antenne (AU) pour commuter les signaux de sortie des antennes (Ant1, Ant2), le commutateur d'antennes (AU) étant commuté alternativement entre les antennes (Ant1, Ant2) après chaque intervalle de Fourier en fonction de la durée des intervalles de Fourier utilisés,
- un mélangeur (HF/ZF) connecté en aval du commutateur d'antenne (AU) pour transposer les signaux d'antennes dans un domaine de fréquences intermédiaires défini,
- un convertisseur analogique-numérique (A/D) connecté en aval du mélangeur (HF/ZF) et

- un transformateur de Fourier (FFT) connecté en aval du convertisseur analogique-numérique (A/D).

3. Procédé de radiogoniométrie selon la revendication 1, **caractérisé en ce que**

   - chaque antenne (Ant1, Ant2) est attachée à un canal d'analyse associé constitué au moins de
   - un mélangeur (HF/ZF) pour transposer un signal d'antenne dans un domaine de fréquences intermédiaires défini,
   - un convertisseur analogique-numérique (A/D) connecté en aval du mélangeur (HF/ZF) et
   - un transformateur de Fourier (FFT) connecté en aval du convertisseur analogique-numérique (A/D),
     et **en ce que**
   - la mesure de la différence de phases ($\Phi1 - \Phi2$) entre les signaux de sortie est réalisée par les transformateurs de Fourier (FFT) associés à chaque antenne (Ant1, Ant2).

4. Procédé de radiogoniométrie selon la revendication 3, **caractérisé en ce que**

   - on réalise dans un canal d'analyse seulement, après la transformation de Fourier (FFT), une analyse de séquence de phases pour déterminer la fréquence (f) du signal et **en ce que**
   - on utilise la fréquence (f) du signal pour déterminer l'angle d'incidence.

5. Procédé de radiogoniométrie selon la revendication 3, **caractérisé en ce que**

   - on réalise dans chaque canal d'analyse, après la transformation de Fourier (FFT), une analyse de séquence de phases pour déterminer la fréquence (f) du signal, **en ce que**
   - on moyenne les fréquences de signaux trouvées dans chaque canal d'analyse de manière définie pour former une fréquence (f) de signal moyennée, et **en ce que**
   - on utilise la fréquence (f) du signal moyennée pour déterminer l'angle d'incidence.

6. Procédé de radiogoniométrie selon l'une des revendications précédentes, **caractérisé en ce qu'**on utilise une transformation de Fourier (FFT) au moins lors de l'arrivée de signaux incidents dans le domaine des hautes fréquences ou des fréquences les plus élevées.

7. Procédé de radiogoniométrie selon l'une des revendications précédentes pour l'utilisation lors d'une radiogoniométrie simultanée dans laquelle on détermine pour l'essentiel simultanément, les directions incidentes d'au moins deux ondes incidentes différentes.

Fig. 1

EP 0 908 741 B1

**Fig. 2**